# EUROPÄISCHE PATENTANMELDUNG

(11) **EP 1 318 166 A2**
(43) Veröffentlichungstag der Anmeldung: **11.06.2003**
(21) Anmeldenummer: 02027454.4
(22) Anmeldetag: 09.12.2002
(51) Int. Cl.: C08J 11/08, B29B 17/00, B26F 3/06

(54) **Stoffliche Wiederverwertung von Styropor**

(30) Priorität: 08.12.2001 DE 10160404; 25.11.2002 DE 10160404; 02.12.2002 DE 10248345
(71) Anmelder: Linden, Alfred, 58540 Meinerzhagen (DE)
(72) Erfinder: Linden, Alfred, 58540 Meinerzhagen (DE)

(57) **Zusammenfassung**

Die stoffliche Wiederverwertung von Hartschaum, insbesondere von Styropor stellt ein besonderes Problem dar weil das Material im Volumen im Verhältnis von etwa 50:1 reduziert wird, wenn es als Rohstoff wiederverwertet werden soll.

Das hier vorgestellte Verfahren löst dieses Problem durch Zerkleinerung der normalerweise anfallenden Blöcke oder Formstücke praktisch staubfrei und ohne Umweltbelastung und reduziert das Volumen schon zu Beginn des Vorgangs durch Auflösen des Styropors in Lösungsmittel.

Bei Verwendung eines geeigneten Lösungsmittels fällt das gelöste Material leicht aus und kann abtransportiert werden zum Trocknen, wobei das Lösungsmittel zurückgewonnen wird.

Eine chargenweise Verarbeitung wird beschrieben und eine kontinuierliche Verarbeitung unter Verwendung von Extrudern.

## Beschreibung

Die bisher übliche Entsorgung des Hartschaumes Styropor durch Verbrennen ist umweltschädlich und soll ersetzt werden durch eine stoffliche Wiederwertung des wertvollen Rohstoffes Polystyrol.

Das kann erfolgen durch Auflösen des Styropors 04 mittels eines Lösungsmittels 12, Rückgewinnung des Lösungsmittels z.B. durch Verdampfen und Ausbringen der getrockneten Masse z.B. durch Granulieren.

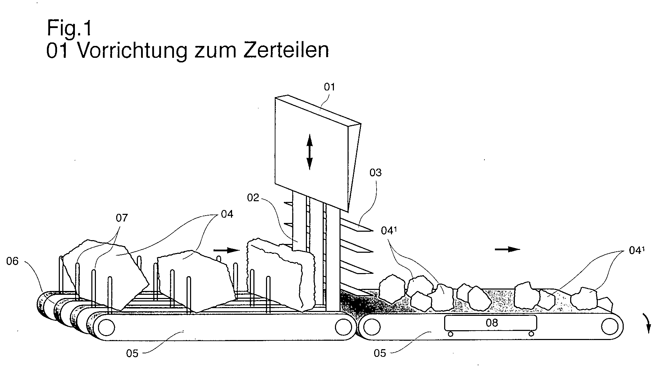

Erfindungsgemäß dienen diesem Zweck verschiedene Verfahren:
Es wird vorgeschlagen, das in der Regel in sehr unterschiedlich großen Blöcken anfallende Styropor 04 zunächst zu zerkleinern und zwar abweichend von der bisher üblichen Methode durch Shreddern, Zerhacken und / oder Zermahlen durch ein umweltfreundliches, praktisch staubfreies Zerteilen mittels beheizten Messern 02, 03, Schwertern oder Drähten, die feststehen können, wenn die Styropor-Blöcke 04 zwangsweise durch eine Zerkleinerungsstation 01 geführt werden, z.B. auf einer aus mehreren parallelen Bändern 06 bestehenden Transporteinrichtung 05 mittels rotierenden Bügeln 07 durch portalförmig angebrachte beheizte Messer 02, 03, Schwerter oder Drähte. Dabei kann z.B. ein horizontales 03 und vertikales 02 Zerteilen in nacheinander angeordneten Stationen durchgeführt werden. → Fig. 1

In dem als erstes vorgestellten ertindungsgemäßen Verfahren_erfolgt
das Einbringen des zerteilten Styropors 04¹ chargenweise. wobei das Lösungsmittel 12 dem beim Zuführen zu ermittelnden Styropor-Gewicht entsprechend so bemessen wird, dass das gesamte zugeführte Styropor aufgelöst wird.
Die Erwärmung von Lösungsmittel 12 und / oder Styropor verringert den Lösungsmittel-Einsatz und verkürzt die Reaktionszeit.
Die Gewichtsermittlung erfolgt durch eine Wiege-Vorrichtung 08 an einem oder mehreren Transportbändern 05, die das Styropor zuführen. Aus diesem Gewicht resultiert die mit der Dosiereinheit 10 zu begrenzende, zuzuführende Menge Lösungsmittel 12.

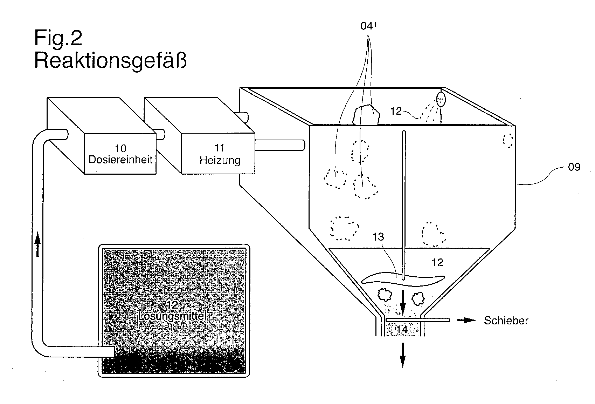

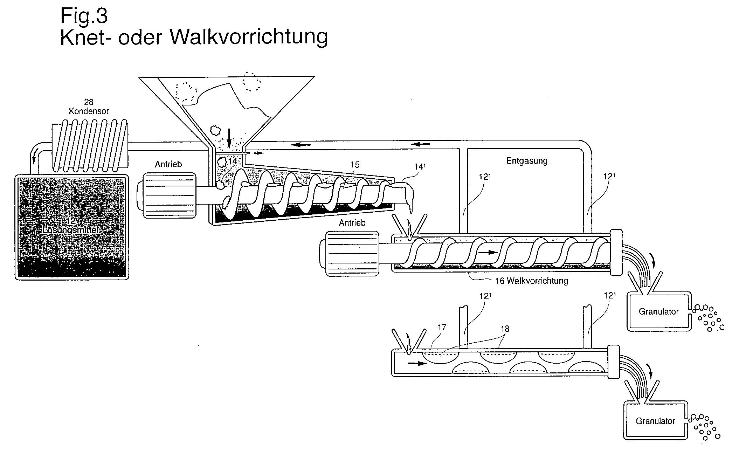

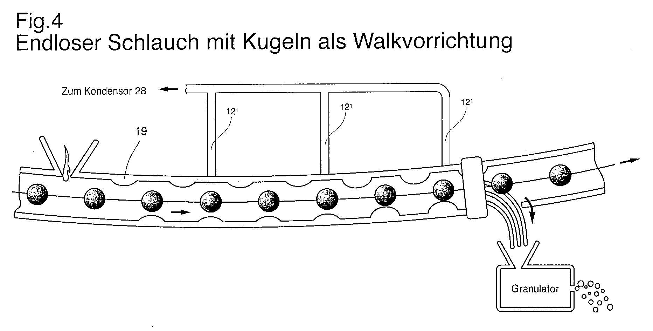

Durch Betätigen des Rührers 13 beim und nach dem Eingeben des Lösungsmittels wird das gelöste Styropor so zusammengezogen, dass es aus dem Reaktionsgefäß 09 abgesaugt oder abgeleitet werden kann - z.B. durch eine Förderschnecke 15 in einem Rohr 16 und zwar in eine Knet- oder Walkvorrichtung 16 zum Auspressen des im Styropor verbliebenen Lösungsmittels 12¹ → Fig. 2
Die Effektivität dieser Vorrichtung wird durch Erwärmen erhöht.
Eine einfache Walkvorrichtung kann gebildet werden durch intermittierend aufblasbare oder füllbare Schlauchabschnitte 18 in einem zum Transport dienenden Rohr 17, die der Peristaltik des Darms nachempfunden ist. → Fig. 3
Auch sind Kugeln oder ähnlich geformte Körper denkbar, die an Abstandhaltern befestigt, durch einen endlosen Schlauch 19 voranbewegt werden. → Fig. 4

Zum Entfernen des letzten Restes an Lösungsmittel 12¹ aus dem gelösten Styropor 14 wird dieses entweder einer Heizstrecke zugeführt, oder
einem oder mehreren Walzenpaaren 20, 20¹, die das einen Teppich bildende gelöste Styropor 14¹ unter Druck walken und darin noch befindliches Lösungsmittel 12¹ herauspressen. Erwärmen der Walzen steigert deren Effizienz.
Die Ausbeute an Lösungsmittel 12² wird gesteigert, wenn der Mantel der Walzen mit Löchern versehen ist, durch die - möglichst angewärmte - Blaslufl 24 austritt, die das beim Walzen ausgepresste Lösungsmittel 12² verdunsten lässt und abtransportiert.

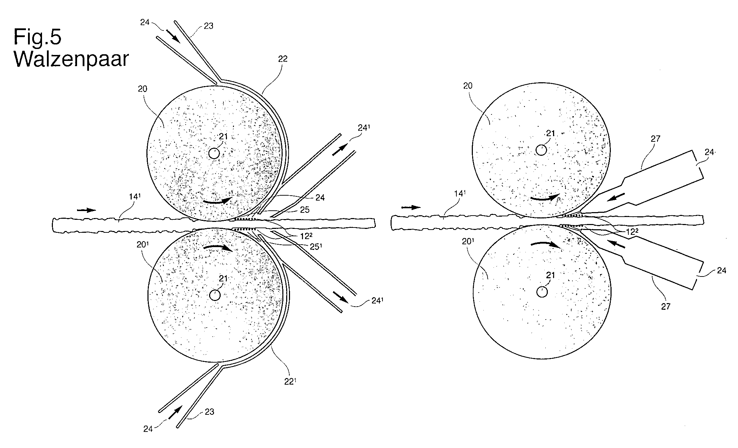

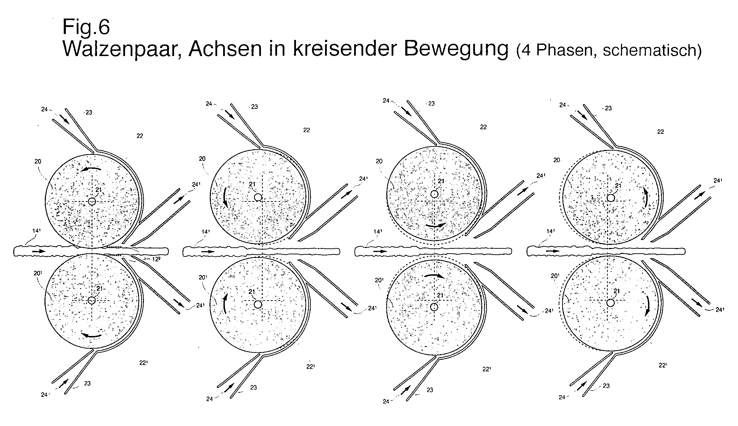

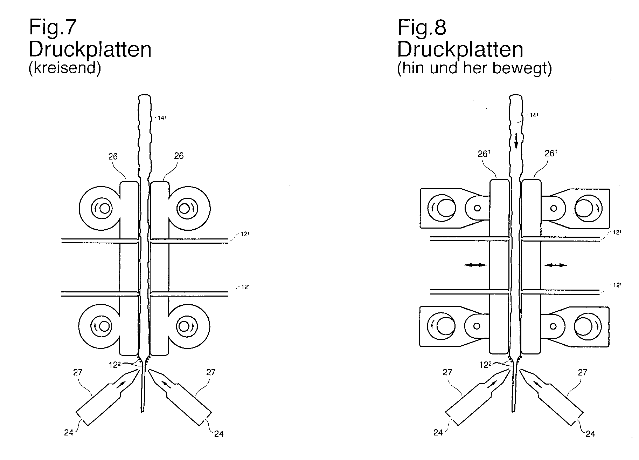

Die gleiche Wirkung wird erzielt durch feststehende, die Walzen 20, 20¹ in dem außerhalb des Walzgutes liegenden Bereich umschließende Leitbleche 22, 22¹ die von außerhalb herangeführte erwärmte Blasluft 24 gezielt austreten lassen in die von Walze 20 bzw. 20¹ und Walzgut 14¹ gebildeten Spalten 25 bzw. 25¹.
Dabei wird durch die warme Blasluft 24 das aus dem vom gelösten Styropor gebildeten Teppich 14¹ durch den Walzendruck herausgepreßte Lösungsmittel 12² zum Verdunsten gebracht und mit der Luft 24¹ abtransportiert.
Das Anwärmen bzw. Warmhalten der von der warmen Blasluft 24 umspülten Walzen 20, 20¹ ist dabei ein willkommener Nebeneffekt. → Fig. 5
Eine größere Ausbeute an Lösungsmittel 12² wird dadurch erzielt, dass die Walzen 20, 20¹ bei durchlaufendem Teppich aus gelöstem Kunststoff 14¹ intermittierend angedrückt und gelüftet werden, weil sich beim oder nach dem Andrücken Lösungsmittel 12² auf und / oder neben der Druckstelle ansammelt.
Ein mehrmaliges Einwirken der Walzen 20, 20¹ in einem Material- Durchlauf ist erzielbar durch kreisende Bewegung der Achsen 21 der Walzen 20, 20¹ und zwar entgegen der Drehrichtung der Walzen. → Fig. 6
Vielleicht ist es in bestimmten Einsatzfällen zweckmäßig, an Stelle eines Walzenpaares gegenläufig kreisende parallele Druckplatten 26 einzusetzen, die in ihrem Druckpunkt das im durchlaufenden Kunststoff 14¹ enthaltene Lösungsmittel 12¹ auspressen, und zwar je nach Vorschub des Teppichs aus gelöstem Kunststoff 14' zu wiederholten Malen in einem Durchgang. → Fig. 7
An Stelle kreisender Druckplatten können auch gegenläufig hin- und her-bewegte Druckplatten 26¹ das Auspressen bewirken und ebenfalls, je nach Vorschub des Teppichs aus gelöstem Kunststoff 14¹ zu wiederholten Malen je Durchgang. → Fig. 8
Sowohl bei Walzen 20, 20¹ als auch bei Druckplatten 26 oder 26¹ ist es möglich, Warmluft 24 zum Verdunsten freigewordenen Lösungsmittels 12² und dessen Abtransport durch den Luftstrahl 24¹ einzusetzen. Dazu wird die Warmluft 24 z.B. mit einer Breitschlitzdüse 27 in die von Walze 20 bzw. 20¹ und Teppich 14¹ gebildeten Spalten 25 bzw. 25¹ eingeführt bzw. der Grenzbereich der dem Teppich aufgelegenen Druckplatten 26, 26¹ wird mit warmer Blasluft 24 beaufschlagt.
Die mit Lösungsmittel angereicherte Luft 24¹ wird durch einen Kondensor 28 strömend abgesaugt zur Rückgewinnung des Lösungsmittels und zur Reinigung der Abluft.
Für die Rückgewinnung des Lösungsmittels bietet sich auch ein Entgasungs-Extruder an, bei dem das verdampfende Lösungsmittel mittels nachgeschalteter Vakuumpumpe oder Absaugvorrichtung ebenfalls über einen Kondensor 28 geleitet und zurückgewonnen wird.
Ökonomisch sinnvoll ist das Nachschallen einer Granulieranlage für die Möglichkeit einer stoffliche Weiterverarbeitung.

Ein zweites, modifiziertes Verfahren sieht
eine kontinuierliche Verarbeitung des zerkleinerten Styropors vor, das nach der Verwiegung 08 einem Extruder zugeführt wird und zwar zusammen mit der aus dem ermittelten Gewicht resultierenden Menge Lösungsmittel, dessen Einspritzen in mehreren Stationen des Extruders erfolgt.
Anzustreben ist die Zufuhr einer ersten Teilmenge schon im Bereich des Einfülltrichters des Extruders bzw. in dessen Zuführbereich.
Unter anderem auch zur räumlichen Verlängerung des Trockenvorgangs kann es zweckmäßig sein, das in einem ersten Extruder gelöste Material mittels eines zweiten Extruders nachzutrocknen, der für diese Aufgabe ausgelegt ist.
Wegen der sich beim Lösen des Materials ergebenden starken Reduzierung des Volumens im Verhältnis von etwa 60:1 bietet sich das Zusammenschalten zweier verschieden dimensionierter Extruder an, auch unter Berücksichtigung von Entgasungsvorrichtungen, erforderlicher Antriebsleistung und entsprechendem Austrag des fertigen Materials in eine Granuliervorrichtung
Es kann auch notwendig sein, zwei oder mehrere erste Extruder einem zweiten Extruder zuzuordnen, zu dessen kontinuierlicher Auslastung.
Es ist denkbar zur Rückgewinnung des Lösungsmittels mehrere Entgasungseinheiten einem Kondensor 28 mit einer Vakuum-Pumpe bzw. Ansaugeinrichtung anzuschließen
Der Reinigungs-Aufwand und die Anzahl von Betriebsstörungen wird stark reduziert, wenn alle mit dem gelösten Styropor in Berührung kommenden Teile mit einer glatten und materialabstoßenden Oberfläche versehen werden.
Eine Anzahl Lösungsmittel sind für den beschriebenen Vorgang geeignet, besonders ein aliphatisches Keton.

## Patentansprüche

1. Vorrichtung und Verfahren zur stofflichen Wiederverwertung von Teilen aus verschäumten Kunststoffen, insbesondere Styropor, **dadurch gekennzeichnet, dass** zu entsorgende Blöcke oder Gegenstände daraus zerkleinert und in einem Lösungsmittel oder Lösungsmittel-Gemisch gelöst werden.

2. Vorrichtung und Verfahren zur umweltfreundlichen Entsorgung von Teilen aus verschäumten Kunststoffen, insbesondere Styropor, gemäß dem vorherigen Anspruch, **dadurch gekennzeichnet, dass** das Zerkleinem praktisch staubfrei durch Heizdrähte oder durch erwärmte Messer als Schneidwerkzeug erfolgt.

3. Vorrichtung und Verfahren gemäß dem vorherigen Anspruch, **dadurch gekennzeichnet, dass** die beheizten Drähte bzw. erwärmten Messer den gewünschten Maximal-Dimensionen der Teilstücke entsprechend fest positioniert sind und der Materialtransport beim Zerkleinern zwangsweise erfolgt.

4. Vorrichtung und Verfahren nach dem vorherigen Anspruch, jedoch **dadurch gekennzeichnet dass** die Schneidwerkzeuge für horizontale und vertikale Schnitte in nacheinander angeordneten Stationen positioniert sind.

5. Vorrichtung und Verfahren gemäß einem der vorherigen Ansprüche, **dadurch gekennzeichnet, dass** die Lösungsmittel-Menge jeweils adäquat dem Gewicht des aufzulösenden verschäumten Kunststoffes bemessen wird.

6. Vorrichtung und Verfahren gemäß einem der vorherigen Ansprüche, insbesondere dem vorherigen Anspruch, **dadurch gekennzeichnet, dass** das Lösungsmittel vor dem Lösungsvorgang erwärmt wird.

7. Vorrichtung und Verfahren nach einem der vorherigen Ansprüche, **dadurch gekennzeichnet, dass** das Zusammenbringen des verschäumten Kunststoffes mit Lösungsmittel unter Rühren erfolgt.

8. Vorrichtung und Verfahren nach einem der vorherigen Ansprüche, **dadurch gekennzeichnet, dass** der gelöste Kunststoff anschließend in eine Knet- oder Walkvorrichtung transportiert wird.

9. Vorrichtung und Verfahren nach dem vorherigen Anspruch, **dadurch gekennzeichnet, dass** die Knet- bzw. Walkeinrichtung beheizt ist.

10. Vorrichtung und Verfahren nach dem Anspruch 9, **dadurch gekennzeichnet dass** die Walkvorrichtung gebildet wird durch in ein Rohr hineinragende oder darin befindliche Schlauchabschnitte, die intermittierend durch Aufblasen oder Befüllen ausgedehnt und wieder entlüftet bzw. entleert werden.

11. Vorrichtung und Verfahren nach einem der vorherigen Ansprüche, **dadurch gekennzeichnet dass** die Walkvorrichtung aus einem endlosen Schlauch besteht, in dem durch Abstandhalter verbundene Kugeln oder ähnlich geformte Körper in Transportrichtung bewegt werden.

12. Vorrichtung und Verfahren nach einem der vorherigen Ansprüche, **dadurch gekennzeichnet, dass** der gelöste Kunststoff in einer Heizpartie so getrocknet wird, dass darin verbliebenes Lösungsmittel verdunstet.

13. Vorrichtung und Verfahren nach einem der vorherigen Ansprüche, **dadurch gekennzeichnet, dass** der gelöste Kunststoff durch ein Walzenpaar geführt wird, das beheizt sein kann.

14. Vorrichtung und Verfahren nach dem vorherigen Anspruch, **dadurch gekennzeichnet, dass** die Walzenmäntel mit einer Vielzahl von Löchern versehen sind, die Walzen innen mit Blasluft beaufschlagt werden und die Walzen über den Teil des Walzenumfangs, der nicht mit dem gelösten Material in Berührung kommt, mit einem den Luftaustritt verhindernden Mantel so versehen sind, dass die aus den Walzen austretende Luft das Material unmittelbar vor und / oder nach dem Walzvorgang beaufschlagt und das durch den Druck der Walze aus dem Walzgut austretende oder freigepresste Lösungsmittel zum Verdunsten oder Verdampfen bringt, aufnimmt und abtransportiert.

15. Vorrichtung und Verfahren nach einem oder beiden der Ansprüche 13 und 14, **dadurch gekennzeichnet, dass** das Material durch mehrere Walzenpaare geführt wird.

16. Vorrichtung und Verfahren nach dem vorherigen Anspruch, jedoch **dadurch gekennzeichnet, dass** temperierte Luft zwischen Walze und Walzenmantel bis in den Kontaktbereich Walze - Walzgut geleitet wird und das durch den Druck der Walze aus dem Walzgut austretende oder freigepresstes Lösungsmittel zum Verdunsten oder Verdampfen bringt, aufnimmt und abtransportiert.

17. Vorrichtung und Verfahren nach einem oder mehreren der Ansprüche 13 bis 16, **dadurch gekennzeichnet, dass** die Walzen des oder der Walzenpaare intermittierend zusammengedrückt und gelüftet werden.

18. Vorrichtung und Verfahren nach einem oder mehreren der Ansprüche 13 bis 17, **dadurch gekennzeichnet, dass** die Achsen der Walzen eines Walzenpaares eine kreisende Bewegung so ausführen und zwar mit der Walzendrehung entgegengesetztem Drehsinn dass das Walzgut in einem Durchgang mehrmals bearbeitet wird.

19. Vorrichtung und Verfahren nach einem oder mehreren der vorherigen Ansprüche, jedoch **dadurch gekennzeichnet, dass** an Stelle der Walzen Druckplatten zueinander parallel eine kreisende Bewegung ausführen und das vom Lösungsmittel zu trocknende Styropor im Druckpunkt so zusammenpressen, dass im Walzgut enthaltenes Lösungsmittel austritt oder freigepresst wird.

20. Vorrichtung und Verfahren nach dem vorherigen Anspruch, jedoch **dadurch gekennzeichnet, dass** an Stelle kreisender Druckplatten hin- und herbewegte Druckplatten so gegeneinander gedrückt werden, dass im auszupressenden Material enthaltenes Lösungsmittel austritt oder freigepresst wird.

21. Vorrichtung und Verfahren nach einem der Ansprüche 12 bis 20, jedoch **dadurch gekennzeichnet, dass** temperierte Luft durch eine breite Düse auf die Oberfläche des gelösten Kunststoffes bzw. in den Kontaktbereich bzw. den Spalt Walze - Walzgut bzw. Druckplatte - Walzgut geblasen wird und das durch Wärme bzw. den Druck der Walze bzw. der Druckplatte aus dem gelösten Material bzw. dem Walzgut austretende oder freigepresste Lösungsmittel zum Verdunsten oder Verdampfen bringt aufnimmt und abtransportiert.

22. Vorrichtung und Verfahren nach einem der vorherigen Ansprüche, insbesondere nach dem vorherigen Anspruch, **dadurch gekennzeichnet, dass** mit Lösungsmitteldampf angereicherte Luft durch einen Kondensor abgesaugt wird zur Rückgewinnung des Lösungsmittels.

23. Vorrichtung und Verfahren nach einem oder mehreren der vorherigen Ansprüche, **dadurch gekennzeichnet dass** das gelöste Material an Stelle einer beheizten Knet- und Walkvorrichtung alternativ oder zusätzlich einem Entgasungs-Extruder zugeführt wird.

24. Vorrichtung und Verfahren nach einem der vorherigen Ansprüche, **dadurch gekennzeichnet, dass** dem Extruder eine Granuliervorrichtung nachgeschaltet wird.

25. Vorrichtung und Verfahren nach einem der Ansprüche 1 bis 6, **dadurch gekennzeichnet, dass** das zerkleinerte aufzulösende Material kontinuierlich einem Extruder zugeführt wird und die Zugabe der erforderlichen Lösungsmittelmenge an mehreren Stationen des Extruders erfolgt.

26. Vorrichtung und Verfahren nach dem vorherigen Anspruch, **dadurch gekennzeichnet, dass** die Zugabe einer ersten Teilmenge der erforderlichen Lösungsmittelmenge bereits beim Einfüllen des zerkleinerten aufzulösenden Materials in den Einfülltrichter bzw. im Zuführbereich des Extruders erfolgt.

27. Vorrichtung und Verfahren nach einem der Ansprüche 25 oder 26, **dadurch gekennzeichnet, dass** das im Extruder gelöste Material zum weiteren Trocknen und / oder Bearbeiten einem zweiten Extruder zugeführt wird, der mit einer Entgasungs-Einrichtung versehen ist.

28. Vorrichtung und Verfahren nach einem oder mehreren der Ansprüche 25 bis 27, **dadurch gekennzeichnet, dass** zur Rückgewinnung des Lösungsmittels zwischen der Entgasungs-Einrichtung des Extruders und einer Vakuum-Pumpe oder Absaugung ein Kondensor für die im Extruder freiwerdenden Lösungsmittel-Dämpfe angebracht ist.

29. Vorrichtung und Verfahren nach einem oder mehreren der vorherigen Ansprüche, **dadurch gekennzeichnet, dass** die Oberfläche der mit dem gelösten Kunststoff in Kontakt kommenden Teile wie Behälter, Heizpartie, Walkpartie, Walzen oder Druckplatten sich gegen den gelösten Kunststoff abstoßend verhält.

30. Verfahren nach einem oder mehreren der vorherigen Ansprüche, **dadurch gekennzeichnet, dass** als Lösungsmittel ein aliphatisches Keton verwendet wird.
